# EUROPÄISCHE PATENTANMELDUNG

(11) **EP 2 896 863 A1**
(43) Veröffentlichungstag der Anmeldung: **22.07.2015**
(21) Anmeldenummer: 15150299.4
(22) Anmeldetag: 07.01.2015
(51) Int. Cl.: F16L 13/16, F16L 41/08

(54) **Rohrverbindung, insbesondere für einen Wärmeübertrager**

(30) Priorität: 20.01.2014 DE 102014200906
(71) Anmelder: MAHLE Behr GmbH & Co. KG, 70469 Stuttgart (DE)
(72) Erfinder: Wolf, Walter, 71570 Oppenweiler-Zell (DE)
(74) Vertreter: Grauel, Andreas

(57) **Zusammenfassung**

Die Erfindung betrifft eine Rohrverbindung (30), insbesondere für einen Wärmeübertrager, mit einem in einem Anschlussstutzen (38) angeordneten Rohrende (32), wobei an dem Rohrende (32) eine nach außen ragende, zumindest abschnittsweise, umlaufende Sicke (34) ausgebildet ist, und zeichnet sich dadurch aus, dass der Anschlussstutzen (38) einen ersten Anschlussstutzen-Abschnitt (66, 76, 110, 78, 80, 82, 84; 112, 114) aufweist, der radial deformierbar ist und einen ersten radial deformierbaren Anschlussstutzen-Abschnitt (66, 76, 110; 78, 80, 82, 84; 112, 114) ausbildet, wobei das Rohrende (32) mittels des ersten radial deformierbaren Anschlussstutzen-Abschnitts (66, 76, 110; 78, 80, 82, 84;112, 114) im Anschlussstutzen (38) gehalten und gesichert ist. Die Erfindung betrifft ferner einen Wärmeübertrager mit einer solchen Rohrverbindung (30) und ein Verbindungsverfahren zur Herstellung einer Rohrverbindung (30).

## Beschreibung

### Technisches Gebiet

Die Erfindung betrifft eine Rohrverbindung, insbesondere für einen Wärmeübertrager, nach dem Oberbegriff von Anspruch 1. Außerdem betrifft die Erfindung einen Wärmeübertrager, insbesondere für ein Kraftfahrzeug und ein diesbezügliches Verbindungsverfahren.

### Stand der Technik

Wärmeübertrager werden als Heizkörper, beispielsweise in einer Klimaanlage des Kraftfahrzeuges, eingesetzt. Der Wärmeübertrager, insbesondere Heizkörper, ist beispielsweise mit zwei Rohrstutzen ausgestattet, an die Leitungen eines Kühlmittelkreislaufs des Kraftfahrzeuges angeschlossen werden können. Hierbei sind typischerweise zwei Leitungsanschlüsse an dem Wärmeübertrager vorgesehen. Durch einen Vorlaufanschluss kann warmes Kühlmittel in den Heizkörper gelangen, durch einen Rücklaufanschluss kann das abgekühlte Kühlmittel den Heizkörper wieder verlassen. Hierbei ist es wichtig, dass die Leitungsanschlüsse als fluiddichte, insbesondere kühlmitteldichte, Verbindungen, insbesondere Rohrverbindungen, ausgestaltet sind.

Rohr-Leitungsverbindungen und Rohr/Rohr-Verbindungen an sich sind in unterschiedlichen Ausführungsformen bekannt.

Beispielsweise zeigt die US 4,854,417 eine Rohrverbindung an einem Auspuffschalldämpfer. Eine Verbindung eines Einlassrohres mit einem Gehäuse des Auspuffschalldämpfers ist realisiert, indem ein Rohr in eine Öffnung des Gehäuses eingeführt wird, wobei das Rohr mehrere Abschnitte mit unterschiedlichen Durchmessern aufweist, die mit einem, einen Absatz ausbildenden, Abschnitt verbunden sind. Durch eine leichte Deformierung einer Gehäusewand im Bereich der Öffnung beim Einpassen des Einlassrohres, kann das Einlassrohr bei der Montage passgerecht in das Gehäuse montiert werden.

Aus der DE 297 22 732 U1 ist ein Auspuffkrümmer mit einem Zylinderflansch, Krümmerrohren und einem Sammelrohr bekannt. Das Ende des Krümmerrohres bildet die eigentliche Dichtfläche aus. In die Rohröffnung des Flansches ist eine umlaufende Nut eingearbeitet, wobei das Krümmerrohr mittels der Nut einkalibriert wird. Hierbei wird ein einfaches Innenwerkzeug, welches die Rohrwand an der betreffenden Stelle aufspreizt, verwendet. Das Krümmerrohr kann anstelle der Nut auch eine umlaufende Nase aufweisen, die sich auf einer Außenseite des Flansches abstützen kann.

Die DE 10 2005 030 736 A1 betrifft eine Leitungsverbindungsvorrichtung mit einem Rohr, das wenigstens einen Bördel an einem Endstück aufweist, wobei eine dichte und druckfeste Verbindung geschaffen wird, wenn von einem freien Ende des Endstückes wenigstens zwei axial hintereinander liegende Bördel vorgesehen sind, wobei der am Endstück innerste Bördel umfanggrößer ist als der oder die Bördel, die zum freien Ende hin angeordnet sind.

### Darstellung der Erfindung, Aufgabe, Lösung, Vorteile

Es ist die Aufgabe der Erfindung, eine verbesserte Rohrverbindung, insbesondere für einen Wärmeübertrager, und einen verbesserten Wärmeübertrager zu schaffen.

Dies wird mit einer Rohrverbindung, insbesondere für einen Wärmeübertrager, mit den Merkmalen von Anspruch 1 erreicht.

In einem Ausführungsbeispiel der Erfindung weist die Rohrverbindung, insbesondere für einen Wärmeübertrager, ein in einem Anschlussstutzen angeordnetes Rohrende auf, wobei das Rohrende eine nach außen ragende, zumindest abschnittsweise umlaufende, Sicke aufweist. Der Anschlussstutzen weist hierbei einen ersten Anschlussstutzen-Abschnitt auf, der radial deformierbar ist und einen ersten radial deformierbaren Anschlussstutzen-Abschnitt ausbildet, wobei das Rohrende mittels des ersten radial deformierbaren Anschlussstutzen-Abschnittes im Anschlussstutzen gehalten, wie fixiert, und gesichert ist. Bevorzugt ist der Anschlussstutzen einem Wasserkasten bzw. Sammelkasten des Wärmetauschers zugeordnet und mit diesem einstückig verbunden oder verbindbar. Mittels des Rohrendes kann der Wärmetauscher an ein Leitungssystem, bevorzugt an ein Kühlmittelleitungssystem angeschlossen werden. Der erste radial deformierbare Anschlussstutzen-Abschnitt ist bevorzugt ein erster, gebördelter oder gebogener Anschlussstutzen-Abschnitt. Durch den ersten radial deformierbaren Anschlussstutzen-Abschnitt kann eine Sicherung des Rohrendes in dem Anschlussstutzen und letztendlich am Wasserkasten erfolgen. Somit ist eine Rohrverbindung entstanden, bei der keine zusätzlichen Schellen, Klemmen, Verschraubungen oder sonstige Sicherungselemente zur Sicherung des Rohrendes im Anschlussstutzen notwendig sind. Das ist vorteilhaft, da es eine Teilvielfalt, insbesondere eine zu lagernde und damit Lagerkapazität benötigende Teilevielfalt, reduzieren kann. Dadurch kann eine Optimierung der Lagerhaltung erreicht werden und letztendlich können Kosten zur Herstellung des Wärmetauschers eingespart werden. Außerdem ist weniger radialer Bauraum für die Rohrverbindung benötigt, da die zusätzlichen, in radialer Richtung Raum ausfüllenden, Klemmen und Schrauben weggefallen sind.

Der erste radial deformierbare Anschlussstutzen-Abschnitt weist hierbei einen ringförmigen Bereich auf, der ein ringförmiges Segment mit einem ersten Kreissegment und einem zweiten Kreissegment ausbildet. Der erste Anschlussstutzen-Abschnitt kann das Rohrende hierbei umfänglich umschließen. Der ringförmige Bereich ist bevorzugt an einer Seite offen, wobei das Rohrende über den ringförmigen Bereich hinausragt.

Bevorzugt bildet der erste radial deformierbare Anschlussstutzen-Abschnitt eine, das Rohrende umschließende Zylinderfläche mit radial deformierten Bereichen aus. Die Zylinderfläche kann hierbei eine geschlossene Zylinderfläche sein. Alternativ kann die Zylinderfläche unterbrochene Zylinderflächenabschnitte aufweisen.

Bevorzugt weist die Zylinderfläche radial angeordnete Kreissegmente und radial angeordnete Sicken auf. Somit ist am ersten Anschlussstutzen-Abschnitt eine Wellenbördelung ausgebildet. Die Wellenbördelung kann entstehen, indem die Zylinderfläche abschnittsweise um eine zu einer Rohrachse parallelen Achse umgeformt ist.

Alternativ kann die Zylinderfläche bereichsweise Segmente und zwischen den Segmenten angeordnete materialfreie Zwischenräume aufweisen. Dies kann bevorzugt durch eine Biegebördelung entstanden sein, wobei bevorzugt eine Biegung um eine zur Rohrachse parallele Achse durchgeführt wurde.

Eine weitere Ausführungsform der Rohrverbindung zeichnet sich dadurch aus, dass die Zylinderfläche U-förmig ausgebildet ist, wobei die Schenkel des "Us" an einem ersten, im Wesentlichen parallel zu einer z-Achse ausgebildeten, Zylinderflächenabschnitt beidseitig senkrecht zu diesem anschließende und umlaufende zweite Zylinderflächenabschnitte ausbilden. Die U-förmige Zylinderfläche ist hierbei bevorzugt durch ein Biegebördeln mit einer Biegung um eine zur Achse des Rohrendes senkrechten Achse entstanden.

Bevorzugt sind die Bördelformen (Segmente und Kreissegmente) am Umfang des ersten radial deformierten Anschlussstutzen-Abschnitts verteilt. Besonders bevorzugt sind diese in einer 2, 3, 4, 5, 6-fachen Ausführung verteilt. Vorzugsweise sind diese 4-fach, das heißt um 90° an einem Umfang des Rohrendes versetzt, verteilt.

Bevorzugt weist der Anschlussstutzen einen zweiten Anschlussstutzen-Abschnitt auf, der mit dem ersten Anschlussstutzen-Abschnitt einstückig ausgebildet ist. Bevorzugt ist der zweite Anschlussstutzen-Abschnitt am Wasserkasten des Wärmetauschers ausgebildet. Der zweite Anschlussstutzen-Abschnitt ist hierbei bevorzugt konisch ausgebildet, wobei der Konus unstetige Durchmesseränderungen aufweisen kann. Der zweite Anschlussstutzen-Abschnitt kann dabei Abschnitte unterschiedlicher Steigung aufweisen. Bevorzugt ist zwischen dem ersten und dem zweiten Anschlussstutzen-Abschnitt ein Absatz oder eine Anlagefläche ausgebildet, an den oder die die nach außen ragende Sicke angelehnt sein kann. Durch die Anlagefläche kann das Rohrende in seiner Längsposition entlang der Rohrachse fixiert werden. Durch die radial deformierten Abschnitte des Anschlussstutzens kann das Rohrende in einer Ebene senkrecht zur Rohrerstreckungsrichtung fixiert werden (x-y-Ebene).

Eine fluiddichte Rohrverbindung kann durch die Anordnung eines Dichtungselementes zwischen dem Rohrende und dem Anschlussstutzen realisiert werden. Hierbei kann das Dichtungselement ein gummielastisches Dichtungselement sein, beispielsweise ein O-Ring. Das Dichtungselement ist bevorzugt zwischen der Zylinderfläche des ersten Anschlussstutzen-Abschnittes und dem Rohrende angeordnet, insbesondere einer Wand der nach außen ragenden Sicke.

Die Aufgabe wird ebenfalls durch einen Wärmeübertrager mit einer erfindungsgemäßen Rohrverbindung gelöst. Der Wärmeübertrager kann hierbei in einem Kraftfahrzeug angeordnet sein und mit dem Kühlmittelsystem des Kraftfahrzeuges verbunden sein oder verbunden werden. Hierbei ist die Rohrverbindung zwischen dem Wasserkasten des Wärmeübertragers und dem Kühlmittelleitungssystem angeordnet. Der Wärmeübertrager kann eine erste erfindungsgemäße Rohrverbindung am Zulauf und eine zweite Rohrverbindung am Ablauf aufweisen. Durch die Rohrverbindungen kann ein sicherer, insbesondere fluiddichter, bevorzugt kühlmitteldichter, Anschluss des Wärmeübertragers an, beispielsweise das Kühlmittelleitungssystem, und damit an den Kühlmittelkreislauf realisiert werden. Weder kaltes noch warmes Kühlmittel kann an der Verbindungsstelle austreten. Somit ist sichergestellt, dass keine Kraftfahrzeugteile im Motorbereich durch heißes Kühlmittel zerstört werden. Auch die Sicherheit der Fahrzeuginsassen kann hierdurch sichergestellt werden.

Die Aufgabe wird auch durch ein Verbindungsverfahren gelöst, bei dem zur Verbindung eines Wasserkastens eines Wärmetauschers mit einem Rohrende eines Leitungssystems, beispielsweise eines Kühlmittelleitungssystems, folgende Schritte vorgesehen sind:
- Anordnen des Rohrendes in dem Anschlussstutzen,
- Positionieren eines ersten Werkzeugs am ersten Anschlussstutzen-Abschnitt,
- Umformen des ersten Anschlussstutzen-Abschnitts mittels des ersten Werkzeugs oder eines zweiten, zum Umformen des ersten Anschlussstutzen-Abschnitts geeigneten, Werkzeugs.

Bevorzugt erfolgt die Umformung durch eine Biegung um eine zur Rohrachse parallele Achse, wobei eine Wellenbördelung oder eine Biegebördelung erzeugt wird. Hierbei weist die Wellenbördelung radial deformierte Bereiche auf.

In einer Ausgestaltung des Verbindungsverfahrens, erfolgt die Umformung durch eine Biegung um eine zur Rohrachse senkrechte Achse, wobei eine Biegebördelung erzeugt wird.

Durch das erfindungsgemäße Verbindungsverfahren kann eine sichere, ortsfeste Rohrverbindung hergestellt werden. Durch eine Anordnung eines Dichtungselementes zwischen dem ersten Anschlussstutzen-Abschnitt und dem Rohrende, kann die Rohrverbindung fluiddicht, insbesondere kühlmitteldicht, sein.

Weitere vorteilhafte Ausgestaltungen sind durch die nachfolgende Figurenbeschreibung und durch die Unteransprüche beschrieben.

### Kurze Beschreibung der Figuren der Zeichnung

Nachstehend wird die Erfindung auf der Grundlage zumindest eines Ausführungsbeispiels anhand der Figuren der Zeichnung näher erläutert. Es zeigen:
- Fig. 1: eine Rohrverbindung für einen Wärmeübertrager nach dem Stand der Technik in einer perspektivischen Darstellung und in einer Schnittdarstellung,
- Fig. 2: einen Verbindungsclip zur Fixierung eines Rohrendes an einem Anschlussstutzen gemäß dem Stand der Technik in perspektivischer Darstellung und in einer Draufsichtdarstellung,
- Fig. 3: eine schematische Schnittdarstellung einer Rohrverbindung gemäß einem ersten Ausführungsbeispiel der Erfindung,
- Fig. 4: eine perspektivische Darstellung eines ersten Anschlussstutzen-Abschnitts vor der Umformung für eine erfindungsgemäße Rohrverbindung,
- Fig. 5: eine perspektivische Darstellung der Rohrverbindung mit einem ersten radial deformierten Anschlussstutzen-Abschnitts gemäß der Erfindung,
- Fig. 6: eine weitere perspektivische Darstellung der Rohrverbindung mit dem ersten radial deformierten Anschlussstutzen-Abschnitt gemäß der Erfindung,
- Fig. 7: eine schematische Darstellung der Rohrverbindung von Figur 5 als Draufsicht,
- Fig. 8: eine schematische Darstellung einer Rohrverbindung eines weiteren Ausführungsbeispiels gemäß der Erfindung als Draufsicht,
- Fig. 9: die Rohrverbindung von Figur 8 vor der Umformung (links) und nach der Umformung (rechts) in perspektivischer Darstellung,
- Fig. 10: einen ersten Bereich des ersten radial deformierten Anschlussstutzen-Abschnitts der Rohrverbindung der Figuren 5 und 6 in Schnittdarstellung,
- Fig. 11: einen zweiten Bereich des ersten radial deformierten Anschlussstutzes,
- Fig. 12: eine Schnittdarstellung eines Ausschnitts des ersten Anschlussstutzen-Abschnitts gemäß der zweiten Ausführungsform,
- Fig. 13: eine schematische Darstellung des Verbindungsvorgangs für unterschiedliche Ausführungsformen der Rohrverbindung gemäß der Erfindung.

### Bevorzugte Ausführung der Erfindung

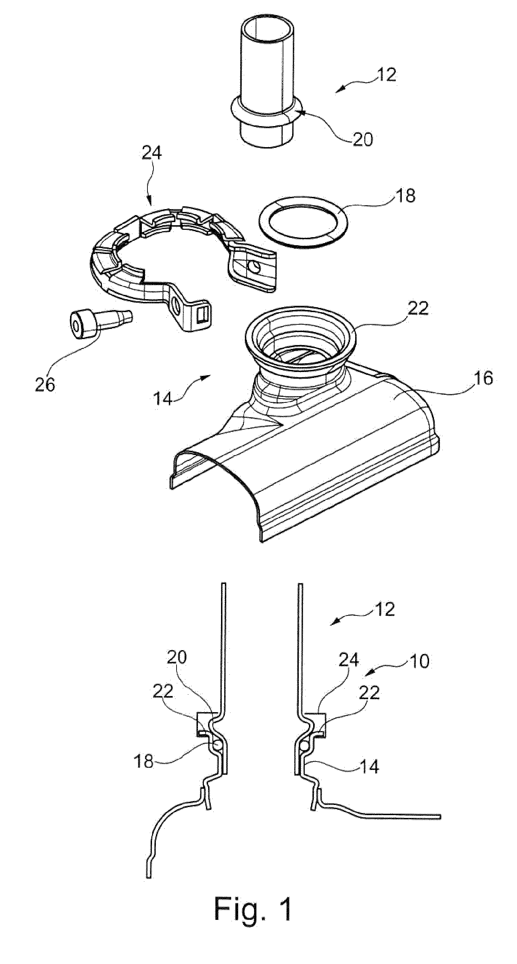

Figur 1 zeigt in schematischer Darstellung eine Rohrverbindung 10 gemäß dem Stand der Technik. Im unteren Abschnitt von Figur 1 ist die Rohrverbindung als Schnittdarstellung gezeigt. Im oberen Teil von Figur 1 sind die Einzelelemente der Rohrverbindung 10 in perspektivischer Darstellung gezeigt. Mittels der Rohrverbindung 10 ist ein Rohrende 12 mit einem Anschlussstutzen 14 eines Wasserkastens 16 eines nicht dargestellten Wärmeübertragers verbunden. Zwischen dem Anschlussstutzen 14 und dem Rohrende 12 ist ein Dichtungselement 18 angeordnet, mittels dem eine fluiddichte Verbindung hergestellt werden kann oder realisiert ist. Das Rohrende weist eine umlaufende und nach außen ragende Sicke 20 auf. Das Rohrende 12 wird bis zur Sicke 20 in den Anschlussstutzen 14 hineingeschoben und liegt auf einem umlaufenden Absatz 22 des Anschlussstutzens 14 an. Mittels einer Klemme 24 erfolgt eine Fixierung des Rohrendes 12 am Anschlussstutzen 14. Die Klemme 24 wird mit einer Schraube 26 geschlossen. Somit ist das Rohrende 12 mit einer festgeschraubten und geschlossenen Klemme 24 am und im Anschlussstutzen 14 gesichert.

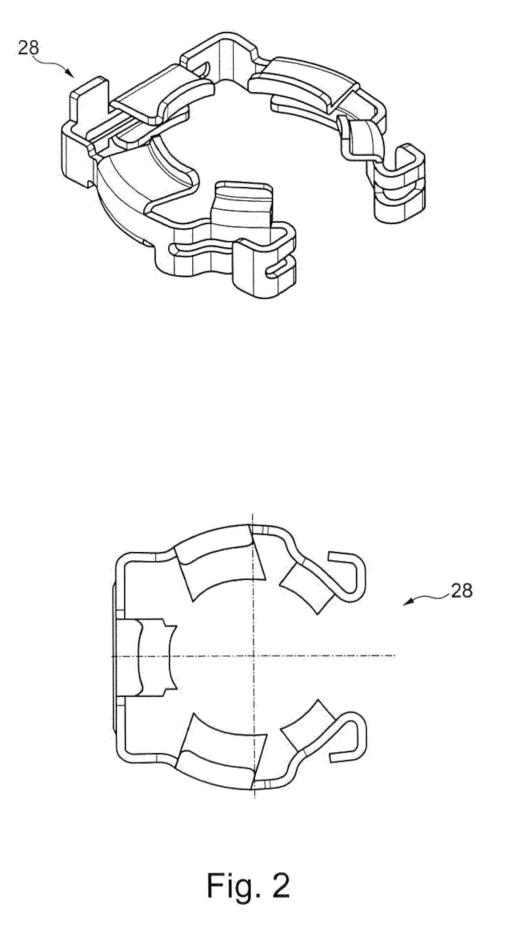

Figur 2 zeigt einen Clip 28 gemäß dem Stand der Technik in perspektivischer Darstellung (oberer Figurenteil) und Draufsicht darstellung in x-y-Richtung (unterer Figurenteil) als alternative Befestigungsmöglichkeit des Rohrendes 12 an dem Anschlussstutzen 14 gemäß dem Stand der Technik. Der Clip 28 wird beim Montageprozess über den Anschlussstutzen 14 geschoben.

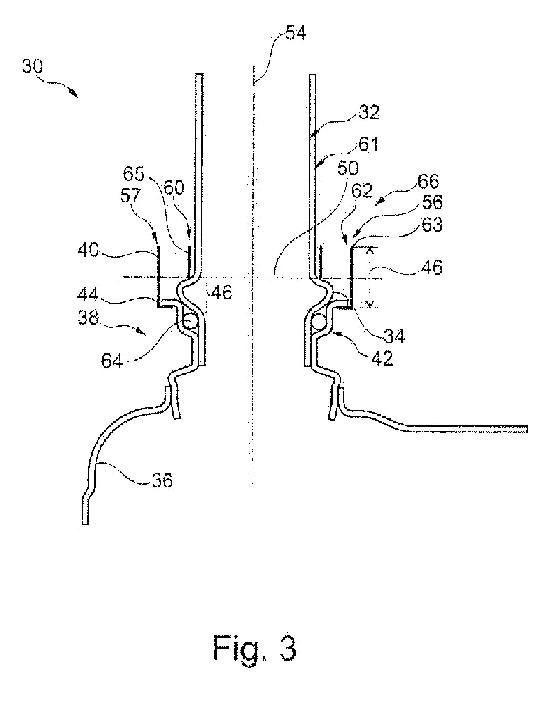

Figur 3 zeigt eine Rohrverbindung 30 in Schnittdarstellung gemäß der Erfindung. Die Rohrverbindung 30 weist ein Rohrende 32 mit einer angeformten, nach außen ragenden und umlaufenden Sicke 34 auf. Ein, an einem Wasserkasten 36 eines nicht dargestellten Wärmeübertragers angeordneter, Anschlussstutzen 38 weist einen ersten Anschlussstutzen-Abschnitt 40 auf. Der Anschlussstutzen 38 weist einen geformten zweiten Anschlussstutzen-Abschnitt 42 auf, der derart geformt ist, dass er einen Anschlussstutzen-Absatz 44 aufweist, auf dem die Sicke 34 im montierten Zustand der Rohrverbindung 30 anliegen kann. Der erste Anschlussstutzen-Abschnitt 40 und der zweite Anschlussstutzen-Abschnitt 42 sind bevorzugt einstückig ausgeführt. Der erste Anschlussstutzen-Abschnitt 40 ist bevorzugt zylindrisch ausgebildet und weist eine Zylinderhöhe 46 auf. Die Zylinderhöhe 46 erstreckt sich im montierten Zustand, in dem das Rohrende 32 in den Anschlussstutzen 38 eingesteckt ist, bevorzugt von dem Anschlussstutzen-Absatz 44 über einen Erstreckungsbereich 48 der Sicke 34 hinaus und umgibt das Rohrende 32 mindestens einige mm.

Eine Schnittlinie 50 stellt eine x-y-Ebene dar, die senkrecht zur Achse 54 des Rohrendes 32, ausgebildet. Der Anschlussstutzen-Absatz 44 ist in einer Ebene parallel zur x-y-Ebene ausgebildet. Auf der in Figur 3 dargestellten linken Hälfte der Rohrverbindung 30 ist der erste Anschlussstutzen-Abschnitt 40 des Rohrendes 32 im Anschlussstutzen 38 gezeigt und somit vor einer anzuwenden Umformung des Anschlussstutzen-Abschnittes 40. In der rechten Hälfte ist der erste Anschlussstutzen-Abschnitt 40 nach einer Umformung des ringförmigen Segmentes 56 dargestellt. Der umgeformte Anschlussstutzen-Abschnitt ist mit der Bezugsziffer 66 bezeichnet. Die links dargestellte Verbindung ist ohne Freischnitt, die rechts gezeigte mit Freischnitt für geringere Umformkräfte. Die Umformung ist mittels eines geeigneten Werkzeugs erfolgt, welches den ersten Anschlussstutzen-Abschnitt 40 oberhalb der Linie 50 umgeformt und ein ringförmiges Segment 56 erzeugt hat. Das ringförmige Segment 56 ist im Umformprozess bereichsweise von einer Ausgangsposition 57 in eine Endposition 60 umgeformt worden, an der es an dem Rohrende 32 bereichsweise umfänglich anliegt. Die Position an und unmittelbar benachbart einem Rohraußenumfang 58 wird mit der Bezugsziffer 60 bezeichnet. Der Anschlussstutzen-Abschnitt 66 weist erste Kreissegmente 63 mit einem ersten Radius auf, und dazwischen angeordnete zweite Kreissegmente 65 mit einem zweiten Radius r2. Der erste Radius r1 entspricht hierbei in etwa dem des ersten Anschlussstutzen-Abschnitts 40. Der zweite Radius r2 ist kleiner als der erste Radius r1. Der erste Anschlussstutzen-Abschnitt 40 ist durch den Umformprozess radial deformiert worden und es ist eine Wellenbördelung mit ersten und zweiten Kreissegmenten 63 und 65 entstanden.

Zwischen einer Rohraußenumfangsfläche 61 und einer Anschlussstutzen-Innenfläche 62 ist ein Dichtungselement 64, beispielsweise ein O-Ring, angeordnet. Die Formen des Anschlussstutzens 38 können in der x-y-Ebene unterschiedlich ausgebildet sein. Beispielsweise rund oder oval.

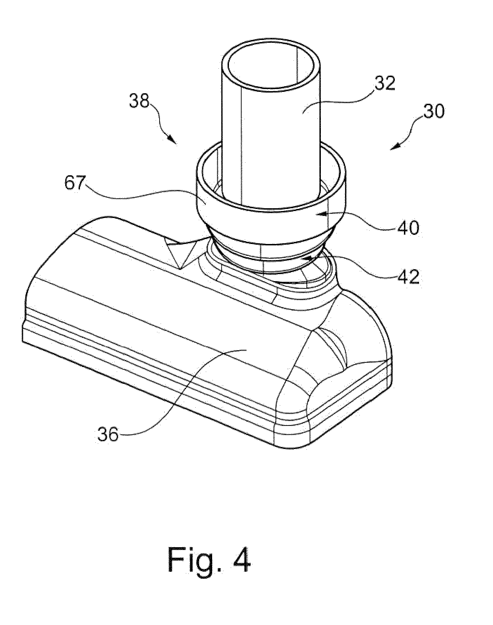

Figur 4 zeigt die Rohrverbindung 30 in perspektivischer Darstellung, wobei das Rohrende 32 noch nicht im Anschlussstutzen 38 fixiert und gesichert ist. Gleiche Teile sind mit den gleichen Bezugszeichen bezeichnet. Der Wasserkasten 36 weist den Anschlussstutzen 38 mit dem ersten Anschlussstutzen-Abschnitt 40 und dem zweiten Anschlussstutzen-Abschnitt 42 auf. Das Rohrende 32 ist in den Anschlussstutzen 38 hineingesteckt und ragt über den ersten Anschlussstutzen-Abschnitt 40 hinaus. Der erste Anschlussstutzen-Abschnitt 40 ist ringförmig um das Rohrende 32 angeordnet und von diesem beabstandet angeordnet. Das ringförmige Segment 56 bildet eine Zylinderfläche 67 aus. Die Zylinderfläche 67 ist bevorzugt durchgängig ausgebildet.

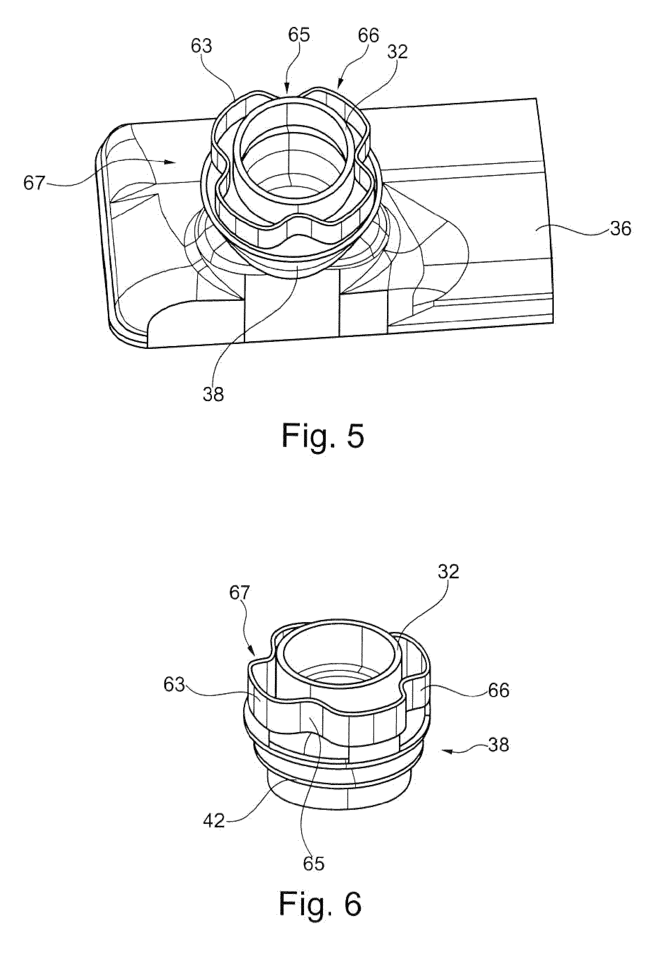

Figur 5 zeigt in perspektivischer Darstellung von schräg oben die Rohrverbindung 30. Der Anschlussstutzen-Abschnitt 40 wurde umgeformt und hat den radial deformierten Anschlussstutzen-Abschnitt 66 gebildet. Der Anschlussstutzen-Abschnitt 66 ist radialsymmetrisch um das Rohrende 32 angeordnet. Gleiche Teile sind mit denselben Bezugszeichen bezeichnet. Der Anschlussstutzen-Abschnitt 66 weist das erste Kreissegment 63 und das zweite Kreissegment 65 auf. Die Kreissegmente 63 und 65 bilden die Zylinderfläche 67 aus. Die Zylinderfläche 67 ist einstückig ausgebildet und stellt ein umlaufendes Band dar.

Figur 6 zeigt in perspektivischer Darstellung den Anschlussstutzen 38 mit dem umgeformten Anschlussstutzen-Abschnitt 66 und dem zweiten Anschlussstutzen-Abschnitt 42, die beide radialsymmetrisch um das Rohrende 32 angeordnet sind. Gleiche Teile sind mit denselben Bezugsziffern bezeichnet. Zwischen 42 und 66 können Umfangseitig Bereiche freigestanzt sein.

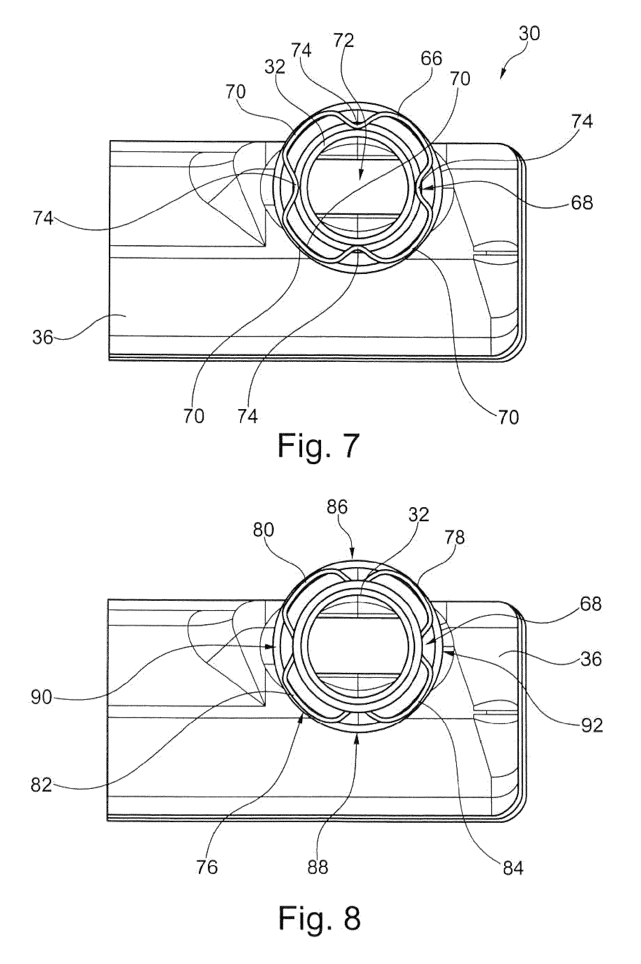

Figur 7 zeigt die Rohrverbindung 30 als Draufsicht mit Blickrichtung entlang der z-Achse 54. Gleiche Teile sind mit denselben Bezugszeichen bezeichnet. Der umgeformte Anschlussstutzen-Abschnitt 66 umgibt das Rohrende 32 zentrisch. Der Anschlussstutzen-Abschnitt 66 ist ringförmig und einstückig ausgebildet. Insbesondere ist der Anschlussstutzen-Abschnitt 66 einstückig mit dem zweiten Anschlussstutzen-Abschnitt 42 ausgebildet. Der Anschlussstutzen-Abschnitt 66 weist vier gleichmäßig über einen Umfang 68 verteilte Ringsegmente 70 auf, die einen Durchmesser 20 aufweisen, der dem Anschlussstutzen-Abschnitt 40 entspricht und vier sickenförmig ausgebildete Ringsegmente 74, wobei sich jeweils Ringsegmente 70 und Ringsegmente 74 abwechselnd über den Umfang 68 verteilen. Die Ringsegmente 70 und 74 bilden sich aus der Zylinderfläche 67..

Figur 8 zeigt ein weiteres Ausführungsbeispiel eines Anschlussstutzen-Abschnitts 41, nachdem dieser deformiert bzw. umgeformt wurde. Der deformierte bzw. umgeformte Anschlussstutzen-Abschnitt ist mit der Bezugsziffer 76 bezeichnet. Der Anschlussstutzen-Abschnitt 76 weist vier getrennte Segmente 78, 80, 82 und 84 auf, die bevorzugt eine gleiche Größe aufweisen und gleichmäßig über den Umfang 68 des Rohrendes 32 verteilt angeordnet sind. Zwischen den Segmenten 78, 80, 82 und 84 ist jeweils ein Zwischenraum 86, 88, 90 und 92 angeordnet. Die Größe der Zwischenräume 86, 88, 90 und 92 ist gleich, so dass die Segmente 78, 80, 82, und 84 gleichmäßig radial beabstandet angeordnet sind. Die Segmente 78, 80, 82 und 84 sind jeweils an beiden Enden nach innen in Richtung der z-Achse 54 gebogen. Hierbei ist das Ende des Segmentes 78, 80, 82 und 84 jeweils unmittelbar benachbart zu der Außenumfangsfläche 68 des Rohrendes 32 angeordnet.

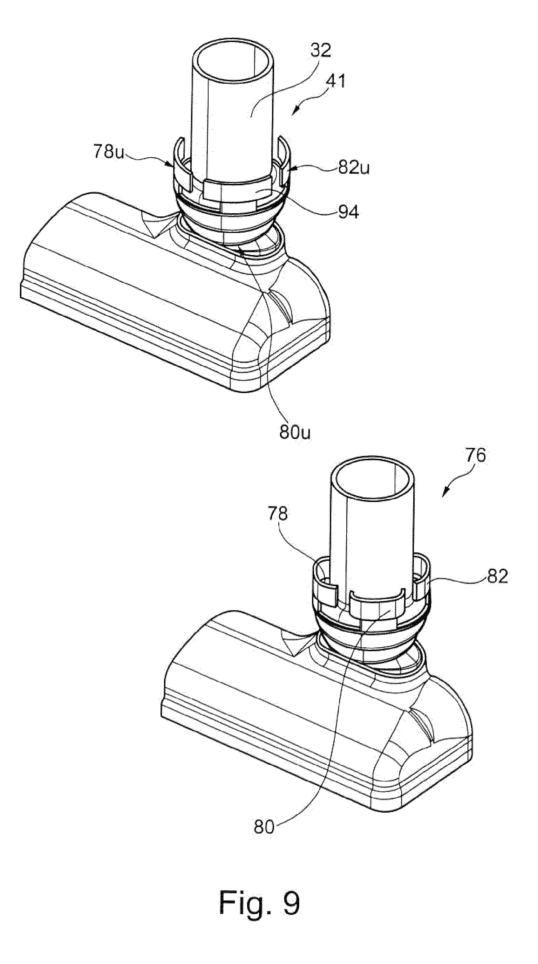

Figur 9 zeigt die Ausführungsform der Rohrverbindung 30 von Figur 8 in perspektivischer Darstellung. Im rechten Teil der Figur 9 sind die Segmente 78u, 84u, 82u und 84u (nicht sichtbar) (der Zusatz u bezeichnet die undeformierten Segmente) noch nicht deformiert und bilden den Anschlussstutzen-Abschnitt 41 aus. Die Segmente 78u, 80u, 82u und 84u sind beabstandet von der Außenumfangsfläche 68 des Rohrendes 32 angeordnet. Der Anschlussstutzen-Abschnitt 41 ist eine Abwandlung des ersten Anschlussstutzen-Abschnitts 40. Eine Kreissegmentfläche 94 verläuft im Wesentlichen parallel zum Rohrende 32. Im rechten Teilbild von Figur 9 ist der Anschlussstutzen-Abschnitt 41 deformiert und weist Segmente 78, 80, 82 und 84 auf, die in Richtung Rohrende 3 gebogene Enden aufweisen undeformiert bzw. vor der Umformung sind.

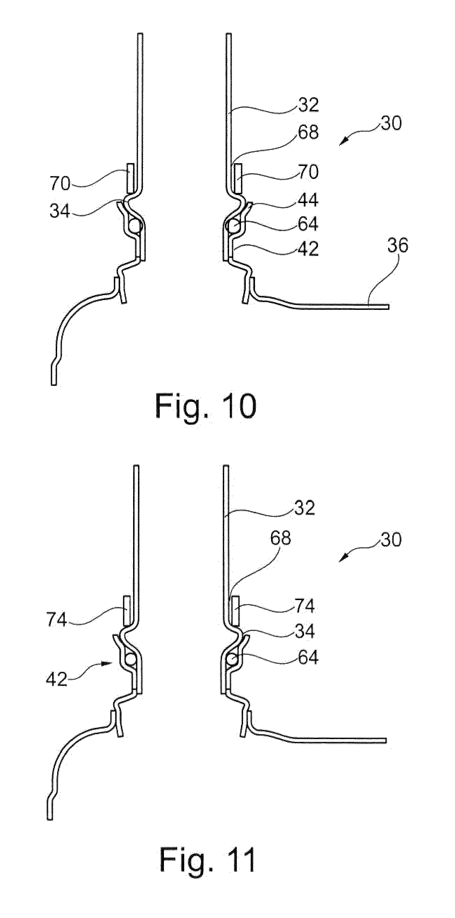

Figur 10 zeigt die Rohrverbindung 30 in Schnittdarstellung in einer Schnittebene, die entlang der z-Achse verläuft und durch zwei sich gegenüberliegenden Ringsegmente 70 verläuft. Das jeweilige Ringsegment 70 ist beabstandet von dem Rohrende 32 angeordnet, insbesondere beabstandet zu dem Außendurchmesser 68 des Rohrendes 32 angeordnet.

Figur 11 zeigt die Rohrverbindung 30 in einer Schnittebene parallel zur z-Achse und in einer Ebene, die durch zwei gegenüberliegend angeordneten sickenförmigen Abschnitte 74 gebildet wird. Die sickenförmigen Abschnitte 74 liegen näher an dem Außenumfangsfläche 68 des Rohrendes 32 an, sind insbesondere unmittelbar benachbart zum Rohrende 32 angeordnet.

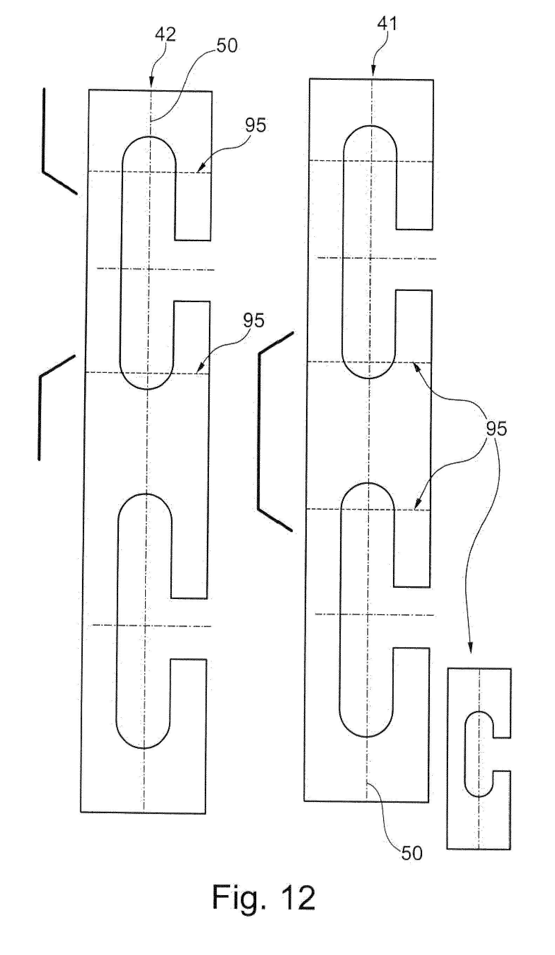

Figur 12 zeigt die zweite Ausführungsform des ersten Anschlussstutzen-Abschnittes 41 in ausgerollter Form, bevor diese zu einem ringförmigen Anschlussstutzen-Abschnitt 41 gebogen wird. Erkennbar sind durch gestrichelte Linien dargestellte Biegekanten 95. Die Biegekanten 95 können durch einen gemeinsamen nicht dargestellten Stempel realisiert werden. Die in der linken Hälfte der Figur 12 dargestellte Anschlussstutzen-Abschnitt 41 und der in der rechten Hälfte der Figur 12 dargestellte Anschlussstutzen-Abschnitt zeigt zwei unterschiedliche mögliche Positionen für die Biegekanten 95.

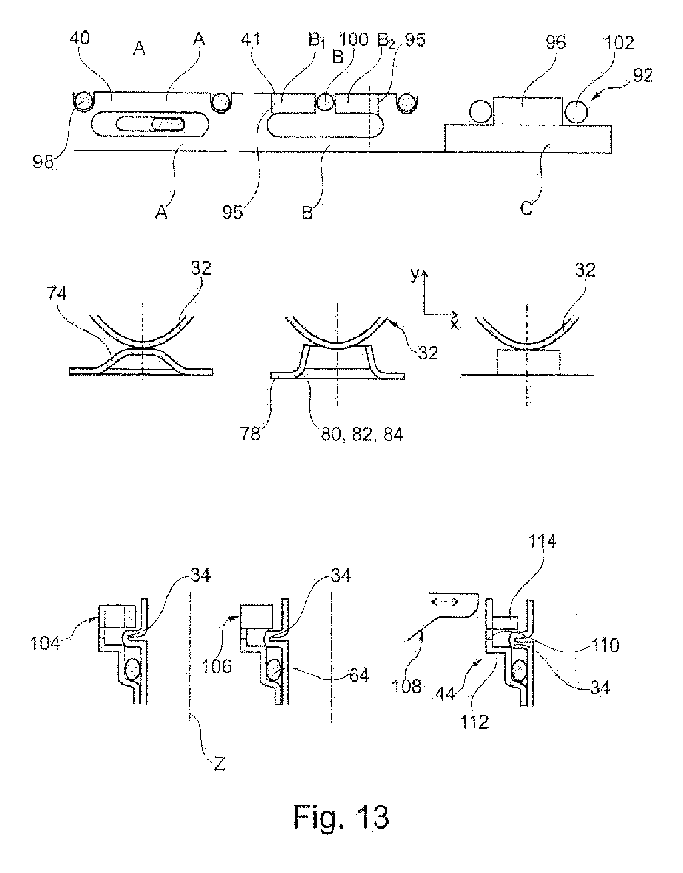

Figur 13 zeigt drei der möglichen Ausführungsformen für die ersten nicht deformierten Anschlussstutzen-Abschnitt 40, 41 und 96. Die mit A bezeichnete Ausführungsform ist die in den Figuren 3, 4, 5, 6, 7 dargestellte Ausführungsform, die ausgeht von dem Anschlussstutzen-Abschnitt 40 im nicht deformierten Zustand. Die mit B bezeichnet Ausführungsform ist die in den Figuren 8, 9, 10, 11 und 12 dargestellte Ausführungsform des ersten Anschlussstutzen-Abschnitts 41 in nicht deformiertem Zustand. Die mit C bezeichnete Ausführungsform ist in Figur 13 erstmalig gezeigt und der erste Anschlussstutzen-Abschnitt dieser Ausführungsform wird mit der Bezugsziffer 96 bezeichnet. Mit den kreisrunden Symbolen 98 ist jeweils eine Position für ein erstes Werkzeug oder ein Positionswerkzeug 98, 100 und 102 für die drei Ausführungsformen bezeichnet. In der mittleren Reihe der Figur 13 sind das Rohrende 32 und der erste Anschlussstutzen-Abschnitt 40, 41 und 96 für die jeweiligen Ausführungsformen in einer Schnittdarstellung in der x-y-Ebene dargestellt. Die untere Reihe zeigt für die drei Ausführungsformen jeweils ein zugehöriges Werkzeug 104, 106, 108 in Schnittdarstellung parallel zur z-Achse.

Die dritte Ausführungsform 96 des ersten Anschlussstutzen-Abschnittes 96 entspricht dem ersten Anschlussstutzen-Abschnitt 40 und weist nach der Deformation eine L-Form 110 auf. Hierbei ist die Sicke 34 quasi von oben und radial vom ersten Anschlussstutzen-Abschnitt 96 umschlossen und in Richtung Sicke 34 vom Anschlussstutzen-Absatz 44 gebildet. Somit weist das L 110 sowohl Teile des ersten Anschlussstutzen-Abschnitts 96 als auch des zweiten Anschlussstutzen-Abschnitts 42 auf. Der Anschlussstutzen-Abschnitt 40 ist umgebogen, so dass zwei Segmente 112 und 114 jeweils im Wesentlichen parallel zueinander angeordnet sind, wobei das kürzere Segment 112 auch nach oben gebogen sein kann, sodass es zumindest bereichsweise einen parallelen Abschnitt zum Segment 114 aufweisen kann. Das Segment 112 weist dabei zumindest bereichsweise den Absatz 44 auf.

## Patentansprüche

1. Rohrverbindung, insbesondere für einen Wärmeübertrager, mit einem, in einem Anschlussstutzen (38) angeordneten Rohrende (32), wobei an dem Rohrende (32) eine nach außen ragenden, zumindest abschnittsweise, umlaufenden Sicke (34) ausgebildet ist, **dadurch gekennzeichnet, dass** der Anschlussstutzen (38) einen ersten Anschlussstutzen-Abschnitt (66, 76, 110, 78, 80, 82, 84; 112, 114) aufweist, der radial deformierbar ist und einen ersten radial deformierbaren Anschlussstutzen-Abschnitt (66, 76, 110; 78, 80, 82, 84; 112, 114) ausbildet, wobei das Rohrende (32) mittels des ersten radial deformierbaren Anschlussstutzen-Abschnitts (66, 76, 110; 78, 80, 82, 84; 112, 114) im Anschlussstutzen (38) im Wesentlichen unbeweglich gehalten und gesichert ist.

2. Rohrverbindung nach Anspruch 1, **dadurch gekennzeichnet, dass** der erste radial deformierbare Anschlussstutzen-Abschnitt (66, 76, 110) ringförmig ausgebildet ist und ein ringförmiges Segment (56) mit einem ersten Kreissegment (63) und einem zweiten Kreissegment (65) ausbildet.

3. Rohrverbindung nach Anspruch 1 oder 2, **dadurch gekennzeichnet, dass** der erste radial deformierbare Anschlussstutzen-Abschnitt (66, 76, 110) eine das Rohrende (32) umschließende Zylinderfläche (67) mit radial deformierbaren Bereichen (63, 65; 70, 74; 78, 80, 82, 84, 112, 114) ausbildet.

4. Rohrverbindung nach einem der vorhergehenden Ansprüche, **dadurch gekennzeichnet, dass** die Zylinderfläche (67) radial angeordnete Kreissegmente (70) und radial angeordnete und nach innen ragende Sicken (74) aufweist.

5. Rohrverbindung nach einem der vorhergehenden Ansprüche, **dadurch gekennzeichnet, dass** die Zylinderfläche (67) Segmente (78, 80, 82, 84) und zwischen den Segmenten (78, 80, 82, 84) angeordnete materialfreie Zwischenräume (86, 88, 90, 92) aufweist.

6. Rohrverbindung nach einem der vorhergehenden Ansprüche, **dadurch gekennzeichnet, dass** die Zylinderfläche (67) U-förmig ausgebildet ist, wobei die Schenkel des "Us" an einem ersten, im Wesentlichen parallel zu einer z-Achse ausgebildeten, Zylinderflächenabschnitt (67) beidseitig senkrecht zu diesem anschließende umlaufende zweite Zylinderflächenabschnitte (112, 114) ausbilden.

7. Rohrverbindung nach einem der vorhergehenden Ansprüche, **dadurch gekennzeichnet, dass** zwischen dem Rohrende (32) und dem Anschlussstutzen (38) ein Dichtungselement (64) angeordnet ist.

8. Rohrverbindung nach einem der vorhergehenden Ansprüche, **dadurch gekennzeichnet, dass** ein zweiter Anschlussstutzen-Abschnitt (42) vorgesehen ist, der mit dem ersten Anschlussstutzen-Abschnitt (40, 66, 76, 110; 41, 78, 80, 82, 84; 96, 112, 114) einstückig ausgebildet ist.

9. Wärmeübertrager, insbesondere für ein Kraftfahrzeug, mit einem einen Anschlussstutzen (38) aufweisenden Wasserkasten (36) und einem Rohrende (32) zum Anschließen des Wärmetauschers an ein Kühlmittelleitungssystem, **dadurch gekennzeichnet, dass** mindestens eine Rohrverbindung (30) gemäß einem der Ansprüche 1 bis 8 vorgesehen ist, insbesondere zur Verbindung des Rohrendes (32) mit dem Anschlussstutzen (38), wobei mittels des ersten radial deformierten Anschlussstutzen-Abschnitts (66, 76, 110; 78, 80, 82, 84; 112, 114) der Rohrverbindung (30) das Rohrende (32) an dem Wasserkasten (36) gehalten und gesichert ist.

10. Wärmetauscher nach Anspruch 9, **dadurch gekennzeichnet, dass** der zweite Anschlussstutzen-Abschnitt (42) zwischen dem ersten Anschlussstutzen-Abschnitt (40, 66, 76, 110; 41, 78, 89, 82, 84; 96, 112, 114) und dem Wasserkasten (36) angeordnet ist, bevorzugt mit dem Wasserkasten (36) verbunden ist oder einstückig mit diesem ausgeführt ist.

11. Verbindungsverfahren zur Verbindung eines Wasserkastens (36) eines Wärmetauschers mit einem Rohrende (32) eines Leitungssystems, beispielsweise deiner Kühlmittelleitungssystems, wobei folgende Schritte vorgesehen sind:
- Anordnen des Rohrendes (32) in dem Anschlussstutzen (38),
- Positionieren eines ersten Werkzeugs (98,100, 102) am ersten Anschlussstutzen-Abschnitt (40, 41, 96),
- Umformen des ersten Anschlussstutzen-Abschnitts (40, 41, 96) mittels des ersten Werkzeugs (98, 100, 102) oder eines zweiten, zum Umformen des ersten Anschlussstutzen-Abschnitts (40, 41, 96) geeigneten, Werkzeugs (104, 106, 108).

12. Verbindungsverfahren nach Anspruch 11, **dadurch gekennzeichnet, dass** das Umformen eine Biegung um eine zur Rohrachse (54) parallele Achse ist, wobei eine Wellenbördelung oder eine Biegebördelung erzeugt wird.

13. Verbindungsverfahren nach Anspruch 11, **dadurch gekennzeichnet, dass** das Umformen eine Biegung um eine zur Rohrachse senkrechte Achse ist, wobei eine Biegebördelung erzeugt wird.
